# EUROPEAN PATENT APPLICATION

(11) **EP 1 482 477 A2**
(43) Date of publication of application: **01.12.2004**
(21) Application number: 04004998.3
(22) Date of filing: 03.03.2004
(51) Int. Cl.: G09G 5/42, G09G 5/18, G09G 5/00

(54) **Video signal processing apparatus for processing a plurality of video signals differing in format**

(30) Priority: 29.05.2003 JP 2003153080
(71) Applicant: Kabushiki Kaisha Toshiba, Minato-ku, Tokyo 105 (JP)
(72) Inventor: Ogawa, Yoshihiko, c/o Toshiba Corporation, Minato-ku Tokyo 105-8001 (JP)
(74) Representative: Henkel, Feiler & Hänzel

(57) **Abstract**

A video signal processing apparatus for processing video signal includes compressing section (102) compressing image elements forming input video signal, with changeable compression characteristic, storage section (211), comprising a plurality of memories, for storing image elements compressed by compressing section, and a writing section (103) writing image elements compressed by compressing section into storage section with write timing in synchronization with input synchronizing signal. A determining section (111) determines the memory from which an image element is to be read from storage section (211), on the basis of input synchronizing signal and output synchronizing signal, and a reading section (106) reads image elements determined by the determining section with read timing in synchronization with output synchronizing signal. An expanding section (107) expands image elements read from the storage section, with changeable expansion characteristic to generate output video signal, and a changing section (112) changes compression characteristics and expansion characteristics according to the display mode of output video signal. The characteristic changing section (112) changes timing for changing expansion characteristic at changing section adaptively according to the timing for changing compression characteristic at changing section, write timing, and read timing so that compression characteristic may be consistent with expansion characteristic for each image element.

## Description

This invention relates to an image display apparatus, a video signal processing apparatus, a video signal generating apparatus, and a video signal processing method which deal with a plurality of video signals differing in characteristic.

In recent years, not only NTSC signals but also personal computer signals, including VGA and SXGA signals, and HDTV signals have been used as video signal sources, leading to the diversification of video signals. In the field of display units that display video signals, not only television sets using cathode-ray tubes but also panel displays, including plasma displays (PDPs) and liquid-crystal displays, have been popularized.

With the diversification of video signals and display units for displaying them, the format (or vertical frequency) of the inputted video signal may differ from that of the display unit. In this case, the vertical frequency of the inputted video signal must be converted into the vertical frequency of the display unit.

Jpn. Pat. Appln. KOKAI Publication No. 2000-98992 (hereinafter, referred to as reference 1) has disclosed a method of adding or deleting images in fields or frames by use of a field memory to convert the vertical frequency of the video signal. With the circuit written in reference 1, the vertical frequency of the video signal can be converted without permitting the write process to pass the read process in memory access.

Panel displays, which have be popularized in recent years, have a fixed number of display pixels. Therefore, to cope with various video signals, the process of compressing or expanding images to convert the size of images into the size of the display panel is indispensable. Jpn. Pat. Appln. KOKAI Publication No. 10-290361 (hereinafter, referred to as reference 2) has disclosed a method of converting the size of images by use of a field memory.

In this type of process, characteristics, including the compression ratio and expansion ratio of images, are not unique. Specifically, recent image display units have various display modes, including the mode of displaying an image whose aspect ratio is 4:3 on a screen whose aspect ratio is 16:9 and the mode of removing the imageless part of an image in letter-box form and displaying the resulting image. These modes may be changed in the middle of displaying the image. According to the change, the characteristics of the compression or expansion processes must be changed.

Here, the problem is that there may be a case where the characteristics for the field written into the field memory do not coincide with the characteristics for the field read from the field memory. That is, in a conventional unit, when the mode change is specified, the characteristics of the compression or expansion process are changed blindly in the field end position immediately after the specification. However, since such a process as the overlapping of fields or the thinning of fields is carried out in the vertical frequency converting process, some fields may not be processed with the compression and expansion characteristics to be applied. This leads to the distortion of the image displayed, which is very undesirable.

As described above, in the conventional video signal processing circuit, there appear fields whose compressing/expansion characteristics differ before and after the field memory is written into or read from, when the display mode is changed. That is, a field compressed with a certain compression characteristic may be expanded with an expansion ratio inconsistent with the compression characteristic. This results in the distortion of the image.

It is, accordingly, an object of the present invention to provide a video signal processing apparatus, a video signal generating apparatus, an image display apparatus, and a video signal processing method which enable the display mode to be changed without permitting the distortion of images.

According to an aspect of the present invention, there is provided a video signal processing apparatus for processing a video signal characterized by comprising a compressing section (102) which compresses image elements that form an input video signal, with a changeable compression characteristic; a storage section (211) which stores the image elements compressed by the compressing section; a writing section (103) which writes the image elements compressed by the compressing section into the storage section with write timing in synchronization with an input synchronizing signal; a determining section (111) which determines an image element to be read from the storage section, on the basis of the input synchronizing signal and an output synchronizing signal; a reading section (106) which reads the image element determined by the determining section from the storage section with read timing in synchronization with the output synchronizing signal; an expanding section (107) which expands the image element read from the storage section by the reading section, with a changeable expansion characteristic to generate an output video signal; a changing section (112) which changes the compression characteristic and expansion characteristic according to the display mode of the output video signal; and a characteristic changing section (112) which changes adaptively the timing for changing the expansion characteristic at the changing section according to the timing for changing the compression characteristic at the changing section, the write timing, and the read timing so that the compression characteristic may be consistent with the expansion characteristic for each of the image elements.

With such means, the vertical frequency of the input video signal can be converted into that of the output video signal via a storage section. In the middle of carrying out the conversion process, when the image display mode is changed by, for example, remote control operation, the compression characteristic and expansion characteristic are changed accordingly. At that time, the timing for changing the expansion characteristic at the expansion means is controlled adaptively so that the expansion characteristic may be consistent with the compression characteristic changed at the compressing section.

Consequently, the compression characteristic change timing can be synchronized with the expansion characteristic change timing on an image element basis on the screen of the display unit. This prevents the appearance of fields whose compression characteristic is not consistent with its expansion characteristic when the display mode is changed, which prevents images from being distorted.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a schematic diagram of an embodiment of an image display apparatus according to the present invention;
FIG. 2 is a functional block diagram of a video signal processing apparatus according to a first embodiment of the present invention;
FIG. 3 is a schematic diagram showing, in time sequence, the way the memories 104, 105 of FIG. 2 are read from and written into when the field frequency of the input video signal and the field frequency of the output video signal are the same;
FIG. 4 schematically shows, in time sequence, the way the memories 104, 105 of FIG. 2 are written into and read from when the field frequency of the input video signal is higher than that of the output video signal;
FIG. 5 schematically shows, in time sequence, the way the memories 104, 105 of FIG. 2 are written into and read from when the field frequency of the input video signal is lower than that of the output video signal;
FIG. 6 is a flowchart for the procedure for processing in the configuration of FIG. 2;
FIG. 7 is a functional block diagram of an image display apparatus 1000 according to a second embodiment of the present invention;
FIG. 8 is a block diagram of another configuration of the memory section 211 in FIG. 7; and
FIG. 9 is a block diagram of another configuration of the memory section 211 in FIG. 7.

Hereinafter, referring to the accompanying drawings, an embodiment of the present invention will be explained in detail.

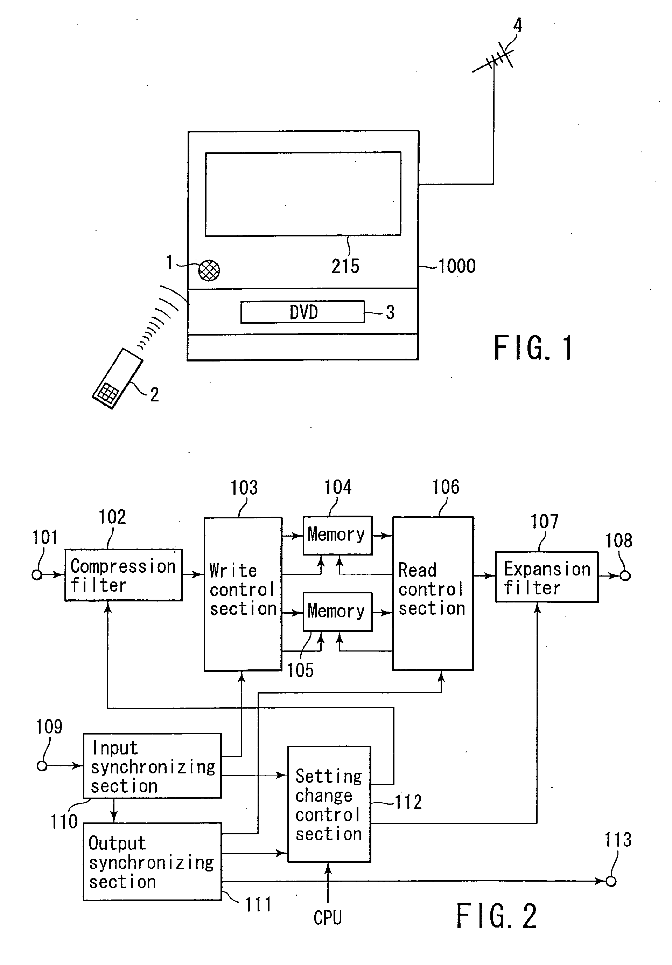

FIG. 1 is a schematic diagram of an embodiment of an image display apparatus according to the present invention. The image display apparatus 1000 of FIG. 1 is realized as, for example, a panel display. The image display apparatus 1000, which has a plurality of display modes, displays images based on video signals differing in format on a display section 215 according to the change of the display mode. A video signal is supplied via an antenna 4 to an internal tuner (not shown), which demodulates it. Alternatively, a DVD (Digital Versatile Disk) unit 3 connected to the display section plays back a recording medium, thereby reproducing a video signal. In addition, the image display apparatus 1000, which includes an infrared light-receiving section 1, can receive various operation requests of the user via a remote control terminal 2. The operation requests include, for example, the change of display mode.

### (First Embodiment)

FIG. 2 is a functional block diagram of a video signal processing apparatus according to a first embodiment of the present invention. The video signal processing apparatus is provided in the image display apparatus 1000 of FIG. 1. In FIG. 2, an input video signal is first inputted via a terminal 101 to a compression filter 102. The compression filter 102 compresses the input video signal field by field with a specific compression characteristic in a filter process, thereby generating compressed data. The generated compressed data is inputted to a write control section 103.

The write control section 103 writes the compressed data outputted from the compression filter 102 into either a memory 104 or a memory 105 according to a control signal supplied from an input synchronizing section 110. Specifically, the write control section 103 writes the compressed data for each field into the memory 104 and memory 105 alternately in synchronization with the input synchronizing signal. The control signal generated in response to the input synchronizing signal at the input synchronizing section 110 is also supplied to an output synchronizing section 111 and a setting change control section 112.

The compressed data stored in each of the memories 104, 105 is read by a read control section 106 with specific read timing and then is inputted to an expansion filter 107. The expansion filter 107 expands the read-out compressed data with a specific expansion characteristic in a filter process. In the process, an output video signal having a vertical synchronizing signal different from the input video signal is generated according to the read timing. The output video signal is outputted at an output terminal 108 and then is displayed on a panel display unit, or the like.

An instruction to read the compressed data from either the memory 104 or 105 is given by the output synchronizing section 111. Information about which of the memories 104, 105 the individual items of the compressed data have been written into and the input synchronizing signal are supplied to the output synchronizing section 111. On the basis of the information and signal, the output synchronizing section 111 determines the compressed data to be read. Then, the identifier for either the memory 104 or memory 105 and the address of the memory are specified, thereby telling the read control section 106 about the compressed data to be read.

Furthermore, the output synchronizing section 111 generates an output synchronizing signal corresponding to the image display mode. The output synchronizing signal is supplied via a terminal 113 to the panel display unit or the like.

In addition, the output synchronizing section 111 generates read timing on the basis of the relationship between the input synchronizing signal and the output synchronizing signal and supplies the timing to the setting change control section 112 and read control section 106.

A CPU (Central Processing Unit) (not shown) or the like informs the setting change control section 112 of the change timing for the display mode. Specifically, when the user makes a display mode change request via the remote control terminal 2 of FIG. 1, the CPU recognizes the request and supplies a control signal indicating the time when the display mode is changed to the setting change control section 112. As result, information about the timing with which the output field is changed and information about which of the memories 104, 105 the compressed data has been read from are given to the setting change control section 112.

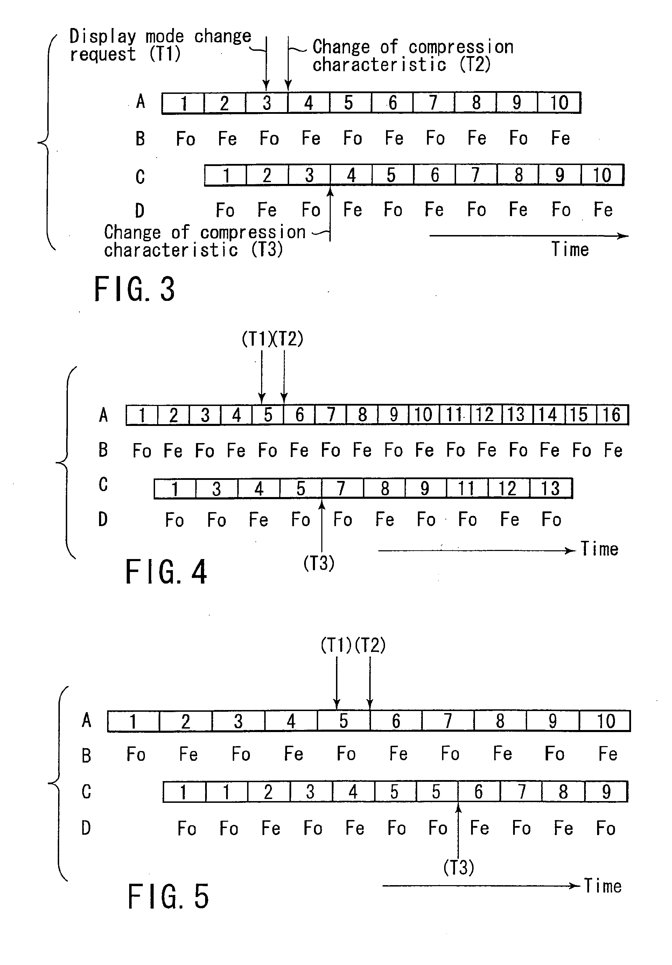

On the basis of such pieces of information, the setting change control section 112 changes the setting of the characteristic of the compression filter 102 and the setting of the characteristic of the expansion filter 107 independently with adaptively set timing. Next, the procedure for the process of converting the vertical synchronizing signal of the video signal will be explained by reference to FIGS. 3 to 5.

FIG. 3 is a schematic diagram showing, in time sequence, the way the memories 104, 105 of FIG. 2 are read from and written into when the field frequency of the input video signal and the field frequency of the output video signal are the same. The field frequency and the synchronizing signal have almost the same meaning. In FIG. 3, the elapse of time is shown in the horizontal direction.

FIG. 3A schematically shows an input video signal. Each number indicates a field. FIG. 3B shows a memory into which the compressed data obtained by compressing the fields is written. The compressed data obtained by compressing "Fo" field (an odd-numbered field) is written into memory 104 and the compressed data obtained by compressing "Fe" field (an even-numbered field) is written into memory 105.

FIG. 3D shows a memory from which the compressed data is read. "Fo" field is read from the memory 104 and "Fe" field is read from the memory 105. As a result, the signal read from the memories is as shown in FIG. 3C. Since the input field frequency and the output field frequency are the same, all of the inputted fields are delayed for a period equivalent to one field and then outputted.

FIG. 4 schematically shows, in time sequence, the way the memories 104, 105 of FIG. 2 are written into and read from when the field frequency of the input video signal is higher than that of the output video signal. In FIG. 4, since the write period of the compressed data is earlier than the read period, the read process must be controlled so that the write process may not pass the read process. Therefore, there is a case where the compressed data is read from the same memory consecutively in time. As a result, the fields of the signal read from the memories are as shown in FIG. 4C. That is, since the field frequency in the write process is higher, some fields are skipped and the resulting signal is outputted.

FIG. 5 schematically shows, in time sequence, the way the memories 104, 105 of FIG. 2 are written into and read from when the field frequency of the input video signal is lower than that of the output video signal. In FIG. 5, since the write period of the compressed data is later than the read period, the read process must be controlled so that the read process may not pass the write process. Therefore, there is a case where the compressed data is read from the same memory consecutively. As a result, the fields of the signal read from the memories are as shown in FIG. 5C. That is, since the field frequency in the read process is higher, some fields are read in such a manner that they overlap with one another in time.

As described above, the output synchronizing section 111 determines which of the memories 104, 105 the compressed data is to be read from, on the basis of the relationship between the vertical synchronizing signal of the input and that of the output and information about which of the memories the compressed data corresponding to each field has been written into. As a result, there may be a case where the compressed data is not necessarily read from the memories 104, 105 alternately and one of the memories is read from consecutively.

By the above processes, the vertical synchronizing signal of the video signal can be converted. Processes of this type are known and written in, for example, reference 1. The first embodiment discloses a method of combining the process of converging the size of an image with the above processes and further realizing the process of changing the image size according to the display mode without distorting the image.

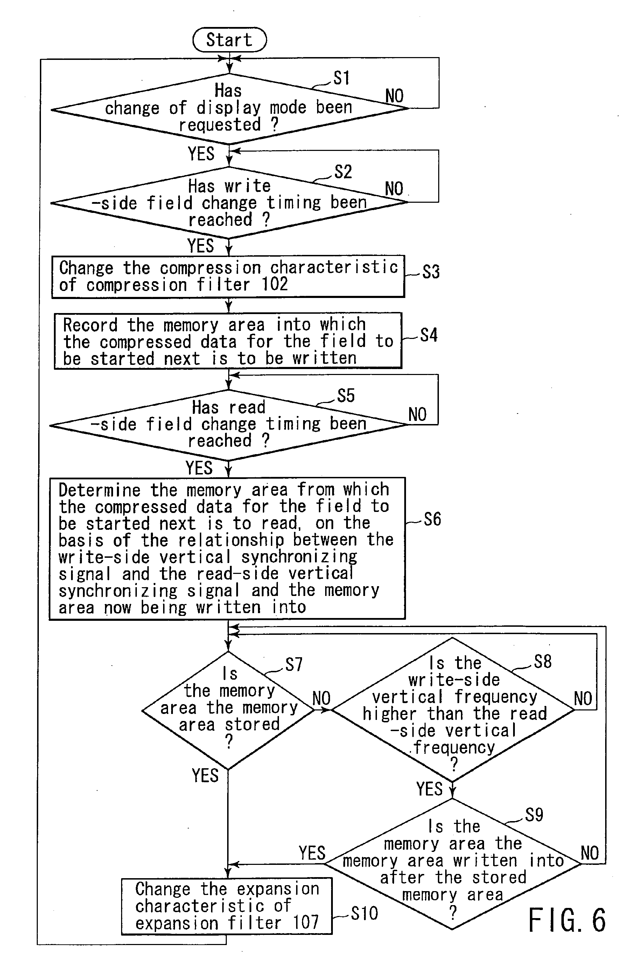

FIG. 6 is a flowchart for the procedure for processing in the configuration of FIG. 2. In FIG. 6, suppose the CPU has recognized that the change of the display mode has been requested via the remote control terminal 2 (Yes in step S1). Then, the process is waited for until the write-side field change timing is reached (step S2). That is, the changing of the compression characteristic resulting from the changing of the display mode is effected with the write-side field end timing.

When the end timing has been reached (Yes in step S2), the setting change control section 112 changes the setting of the compression characteristic of the compression filter 102 according to the requested display mode (step S3). Then, the setting change control section 112 stores the address for the memory area into which the compressed data in the field to be started next is stored (step S4). Then, the process is waited for until the read-side field change timing is reached (step S5). That is, the changing of the expansion characteristic resulting from the changing of the display mode is effected with the read-side field end timing.

When the end timing has been reached (Yes in step S5), the output synchronizing section 111 determines the memory from which the compressed data in the field to be started next and its area, on the basis of the relationship between the write-side (or input-side) vertical synchronizing signal and the read-side (or output-side) vertical synchronizing signal and the memory area in which writing has been done at this time (step S6).

Next, the setting change control section 112 determines whether or not the memory area determined in step S6 is the memory area stored in step S4 (step S7). If Yes in step S7, the procedure goes to the next step, where the setting change control section 112 changes the setting of the compression characteristic of the expansion filter 107 with the read-side field end timing according to the requested display mode (step S10).

If No in step S7, the setting change control section 112 compares the write-side vertical frequency with the read-side vertical frequency (step S8). If the write-side vertical frequency is lower than the read-side vertical frequency (No in step S8), the procedure goes back to step S7, forming a loop. If the write-side vertical frequency is higher than the read-side frequency (Yes in step S8), the procedure goes to the next step, where the setting change control section 112 determines whether the memory area determined in step S6 is the one written into after the memory area into which the address has been stored in step S4 (step S9). If No in this step, the procedure goes back to step S7, forming a loop. If Yes in step S9, the procedure goes to step S10, where the setting of the compression characteristic of the expansion filter 107 is changed.

By the above processes, the timing for changing the setting of the expansion characteristic of the expansion filter 107 is changed adaptively according to the timing for changing the setting of the compression characteristic of the compression filter 102, the timing for writing the compressed data into the memories 104, 105, and the timing for reading the compressed data from the memories 104, 105. This will be explained by reference to FIGS. 3 to 5.

In FIG. 3A, for example, suppose a display mode change request is made in the write period of the input video signal field "3." Let the timing be (T1). Then, with the start timing for field "4," the setting of the compression characteristic of the compression filter 102 is changed. Let the change timing be (T2). The timing for changing the expansion characteristic of the expansion filter 107 is the start timing for the output video field "4" in FIG. 3C. Let the change timing be (T3).

Next, in FIG. 4A, suppose a display mode change request is made at (T1) in the write period of field "5." Then, the start timing for field "6" is (T2). (T3) is the start timing for field "7" in FIG. 4C.

Furthermore, in FIG. 5A, suppose a display mode change request is made at (T1) in the write period of field "5." Then, the start timing for field "6" is (T2).

In the prior art, (T3) is the start timing for the second field "5" in FIG. 5C. This means that the compression characteristic of field "5" in FIG. 5A is not consistent with the expansion characteristic of the second field "5" in FIG. 5C. This is because the compression characteristic has not been changed in field "5" in FIG. 5A.

In contrast, in the first embodiment, by following the procedure of FIG. 6, (T3) is changed adaptively to the starting point in time of field "6" of FIG. 5C. That is, even if a display mode change is requested with any timing, the timing for changing the setting of the expansion characteristic of the expansion filter 107 is changed adaptively. This makes it possible to effect the changing of the setting of the process of writing into the memory and the changing of the setting of the process of reading from the memory in the same part of the signal. That is, the timing for changing the compression characteristic can be synchronized with the timing for changing the expansion characteristic on an image element basis on the screen of the display unit.

In summary, in the first embodiment, the compressed data in the fields is stored in the memories 104, 105. In the signal processing apparatus which changes the vertical frequency of the video signal by changing the write timing and read timing for the compressed data according to the input synchronizing signal and output synchronizing signal, the timing for changing the expansion characteristic of the expansion filter 107 is changed adaptively according to the timing for writing the compressed data into the memories 104, 105 and the timing for reading the compression data from the memories 104, 105.

This enables the compression characteristic to be completely consistent with the expansion characteristic field by field, preventing the appearance of fields whose compression characteristic and expansion characteristic are not consistent with each other when the display mode is changed, which prevents the image from being distorted.

### (Second Embodiment)

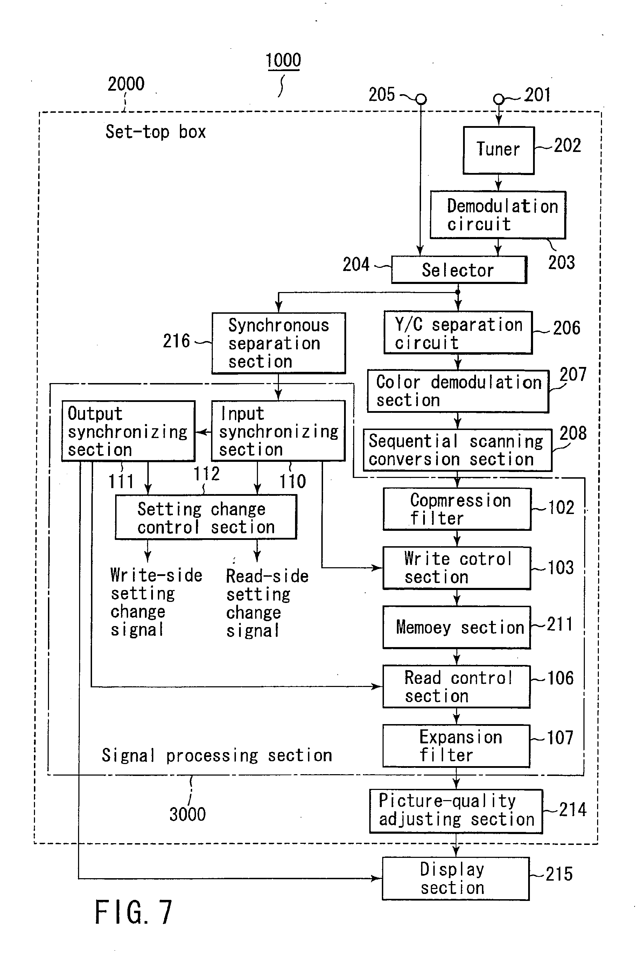

FIG. 7 is a functional block diagram of an image display apparatus 1000 according to a second embodiment of the present invention. In FIG. 7, the same parts as those in FIG. 2 are indicted by the same reference numerals. Only the parts differing from those of FIG. 2 will be explained.

In FIG. 7, radio waves received at an antenna 4 are inputted to an input terminal 201. The signal inputted to the input terminal 201 passes through a tuner 202 and a demodulation circuit 203 and is inputted as a video signal to a selector 204. A signal from an input terminal 205 is also inputted to the selector 204. To the input terminal 205, a video signal or the like outputted from a DVD unit 3 is inputted. The selector 204 selectively outputs one of those signals.

The video signal outputted from the selector 204 is inputted to a Y/C separation section 206. The Y/C separation section 206 separates the inputted video signal into a luminance component and a color component. When the inputted video signal has already been separated into a luminance component and a color component, the separation process is not needed. The output of the Y/C separation section 206 is inputted to a color demodulation section 207, which demodulates a color signal. When the inputted color component has already been demodulated, the demodulation process is not needed. The output of the color demodulation section 207 is inputted to a sequential scanning conversion section 208. The sequential scanning conversion section 208, when the inputted signal is an interlace scanning signal, converts the inputted signal into a sequential scanning signal. When the inputted signal is a sequential scanning signal, the conversion is not needed.

The output of the sequential scanning conversion section 208 is inputted to a compression filter 102, of a signal processing section 3000 and passes through an expansion filter 107, which size-converts the signal. The output of the expansion filter 107 is inputted to a picture-quality adjusting section 214. The picture-quality adjusting section 214 makes various picture-quality adjustments and converts the input format of the display unit into RGB signals. The output of the picture-quality adjusting section 214 is inputted to a display section 215, which displays the inputted signal as images.

The video signal outputted from the selector 204 is inputted to the Y/C separation section 206 and a synchronous separation section 216. The synchronous separation section 216 separates the video signal into a horizontal synchronizing signal and a vertical synchronizing signal and inputs these signals to the input synchronizing section 110 of the signal processing section 3000.

In the above configuration, the signal processing section 3000 is the same as that in FIG. 2. A set-top box 2000 is realized by adding to the signal processing section 3000 the following: the input terminal 201, tuner 202, demodulation circuit 203, selector 204, input terminal 205, Y/C separation circuit 206, color demodulation section 207, sequential scanning conversion section 208, and synchronous separation section 216 on the video signal write side and the picture-quality adjusting section 214 on the signal read side. Moreover, the display section 215 is added to the set-top box 2000, thereby realizing the image display apparatus 1000.

In the configuration, the setting change control section 112 changes the setting of various processes. Specifically, the setting change control section 112 outputs a write-side setting change signal and a read-side setting change signal. The write-side setting change signal performs setting change control of the processes on the write side of the memory section 211. That is, the write-side setting change signal changes the setting of the processes in the tuner 202, demodulation circuit 203, selector 204, Y/C separation section 206, color demodulation section 207, sequential scanning conversion section 208, compression filter 102, write control section 103, and others. The changing of the setting of the processes on the write side of the memory is effected at the time of the change of fields at the input.

On the other hand, the read-side setting change signal changes the setting of the processes in the read control section 106, expansion filter 107, picture-quality adjusting section 214, display section 315, and others. The changing of the setting of the processes on the read side of the memory is effected at the time of the change of fields at the output.

A concrete operation of the setting change control section 112 is the same as in the flowchart of FIG. 6 in the first embodiment. In the second embodiment, not only the characteristics of the compression filter 102 and expansion filter 107 but also the setting of the tuner 202, demodulation circuit 203, selector 204, Y/C separation section 206, color demodulation section 207, sequential scanning conversion section 208, compression filter 102, and write control section 103 on the signal write side and the picture-quality adjusting section 214 and display section 215 on the read side can be changed. That is, to change the display mode, not only the characteristics of the compression filter 102 and expansion filter 107 but also the setting of other devices must often be changed. Such requirements can be met in the second embodiment.

As described above in detail, with the present invention, it is possible to provide a video signal processing apparatus, a video signal generating apparatus, an image display apparatus, and a video signal processing method which enable the display mode to be changed without permitting the distortion of images.

The present invention is not limited to the above embodiments. For instance, while in FIG. 2, the two memories 104, 105 have been used, these may be replaced with two storage areas provided in a common memory.

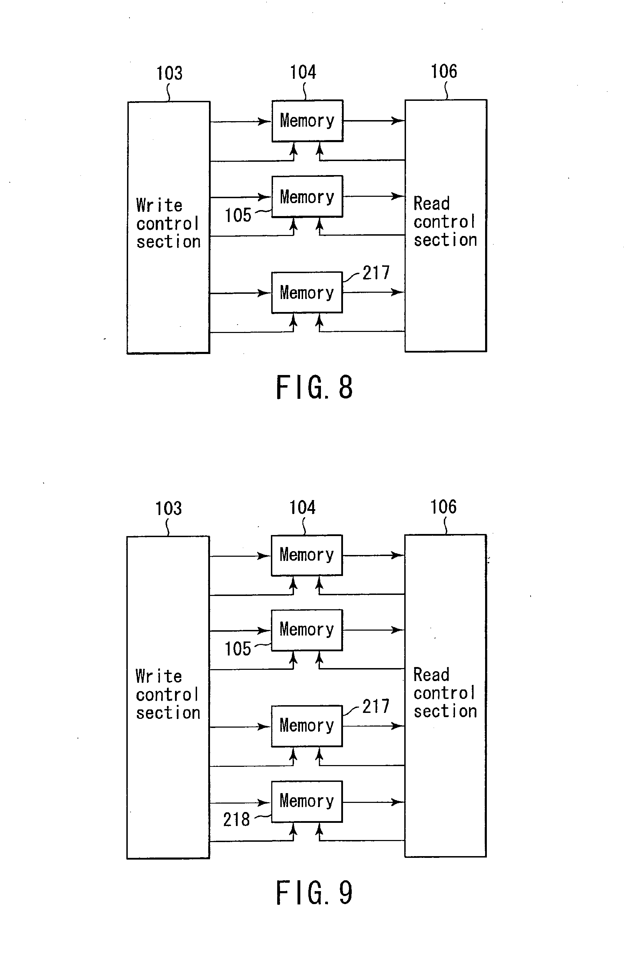

In addition, the number of memories is not restricted to 2. FIGS. 8 and 9 are block diagrams of other configurations of the memory section 211 in FIG. 7. As shown in FIGS. 8 and 9, the fields may be allocated to a large number of memories sequentially and stored in them.

## Claims

1. A video signal processing apparatus for processing a video signal **characterized by** comprising:
a compressing section (102) which compresses image elements that form an input video signal, with a changeable compression characteristic;
a storage section (211) which stores the image elements compressed by the compressing section;
a writing section (103) which writes the image elements compressed by the compressing section into the storage section with write timing in synchronization with an input synchronizing signal;
a determining section (111) which determines an image element to be read from the storage section, on the basis of the input synchronizing signal and an output synchronizing signal;
a reading section (106) which reads the image element determined by the determining section from the storage section with read timing in synchronization with the output synchronizing signal;
an expanding section (107) which expands the image element read from the storage section by the reading section, with a changeable expansion characteristic to generate an output video signal;
a changing section (112) which changes the compression characteristic and expansion characteristic according to the display mode of the output video signal; and
a characteristic changing section (112) which changes adaptively the timing for changing the expansion characteristic at the changing section according to the timing for changing the compression characteristic at the changing section, the write timing, and the read timing so that the compression characteristic may be consistent with the expansion characteristic for each of the image elements.

2. The video signal processing apparatus according to claim 1, **characterized in that**
the storage section includes two storage elements,
the writing section writes the image elements adjacent to each other in time into the two storage elements alternately, and
the determining section specifies one of the two storage elements and determines an image element to be read from the storage section.

3. The video signal processing apparatus according to claim 1, **characterized in that**
the storage section is two storage areas provided in a common storage element,
the writing section writes the image elements adjacent to each other in time into the two storage areas alternately, and
the determining section specifies one of the two storage areas and determines an image element to be read from the storage section.

4. A video signal processing apparatus for processing a video signal **characterized by** comprising:
a first processing section (102) which processes an input video signal with a first changeable characteristic;
a storage section (211) which stores the input video signal processed at the first processing section;
a writing section (103) which writes the input video signal processed at the first processing section into the storage section with write timing in synchronization with an input synchronizing signal;
a determining section (111) which determines an input video signal to be read from the storage section, on the basis of the input synchronizing signal and an output synchronizing signal;
a reading section (106) which reads the input video signal determined at the determining section from the storage section with read timing in synchronization with the output synchronizing signal;
a second processing section (107) which processes the input video signal read from the storage section by the reading section, with a second changeable characteristic;
a changing section (112) which changes the first and second characteristics according to the display mode of the output video signal; and
a characteristic changing section (112) which changes adaptively the timing for changing the second characteristic at the changing section according to the timing for changing the first characteristic at the changing section, the write timing, and the read timing so that the first characteristic may be consistent with the second characteristic for each of the input video signal and output video signal.

5. A video signal generating apparatus which is connected to a display unit (215) for use and generates an output video signal corresponding to the display unit, the video signal generating apparatus **characterized by** comprising:
an acquisition section (201, 202, 203, 204, 205) which acquires an input video signal via a medium;
a separation section (216) which separates an input synchronizing signal from the input video signal; and
a signal processing section (3000) which generates the output video signal from the input video signal and which includes
a compressing section (102) which compresses image elements that form an input video signal, with a changeable compression characteristic;
a storage section (211) which stores the image elements compressed by the compressing section;
a writing section (103) which writes the image elements compressed by the compressing section into the storage section with write timing in synchronization with an input synchronizing signal;
a determining section (111) which determines an image element to be read from the storage section, on the basis of the input synchronizing signal and an output synchronizing signal;
a reading section (106) which reads the image element determined by the determining section from the storage section with read timing in synchronization with the output synchronizing signal;
an expanding section (107) which expands the image element read from the storage section by the reading section, with a changeable expansion characteristic to generate an output video signal;
a changing section (112) which changes the compression characteristic and expansion characteristic according to the display mode of the output video signal on the display unit; and
a characteristic changing section (112) which changes adaptively the timing for changing the expansion characteristic at the changing section according to the timing for changing the compression characteristic at the changing section, the write timing, and the read timing so that the compression characteristic may be consistent with the expansion characteristic for each of the image elements.

6. The video signal generating apparatus according to claim 5, **characterized by** further comprising an accepting section (1) which accepts a request for the change of the display mode via a remote control operation terminal, wherein
the changing section changes the compression characteristic and expansion characteristic according to the acceptance of the request for the change of the display mode.

7. An image display apparatus with a display unit (215) **characterized by** comprising:
an acquisition section (201, 202, 203, 204, 205) which acquires an input video signal via a medium;
a separation section (216) which separates an input synchronizing signal from the input video signal;
a compressing section (102) which compresses image elements that form the input video signal, with a changeable compression characteristic;
a storage section (216) which stores the image elements compressed by the compressing section;
a writing section (103) which writes the image elements compressed by the compressing section into the storage section with write timing in synchronization with the input synchronizing signal;
a determining section (111) which determines an image element to be read from the storage section, on the basis of the input synchronizing signal and an output synchronizing signal;
a reading section (106) which reads the image element determined by the determining section from the storage section with read timing in synchronization with the output synchronizing signal;
an expanding section (107) which expands the image element read from the storage section by the reading section, with a changeable expansion characteristic to generate an output video signal corresponding to the display unit;
a changing section (112) which changes the compression characteristic and expansion characteristic according to the display mode of the output video signal on the display unit; and
a characteristic changing section (112) which changes adaptively the timing for changing the expansion characteristic at the changing section according to the timing for changing the compression characteristic at the changing section, the write timing, and the read timing so that the compression characteristic may be consistent with the expansion characteristic for each of the image elements.

8. The image display apparatus according to claim 7, **characterized by** further comprising an accepting section (1) which accepts a request for the change of the display mode via a remote control operation terminal, wherein
the changing section changes the compression characteristic and expansion characteristic according to the acceptance of the request for the change of the display mode.

9. A video signal processing method used in an image display apparatus **characterized by** comprising:
a compressing step (S3) of compressing image elements that form an input video signal, with a changeable compression characteristic;
a writing step (S4) of writing the image elements compressed in the compressing step into a storage section with write timing in synchronization with an input synchronizing signal;
a determining step (S6) of determining an image element to be read from the storage section, on the basis of the input synchronizing signal and an output synchronizing signal;
a reading step (S7) of reading the image element determined in the determining step from the storage section with read timing in synchronization with the output synchronizing signal;
an expanding step (S8, S9) of expanding the image element read from the storage section in the reading step with a changeable expansion characteristic to generate an output video signal;
a changing step (S3, S10) of changing the compression characteristic and expansion characteristic according to the display mode of the output video signal; and
a characteristic changing step (S7, S8, S9) of changing adaptively the timing for changing the expansion characteristic in the changing step according to the timing for changing the compression characteristic in the changing step, the write timing, and the read timing so that the compression characteristic may be consistent with the expansion characteristic for each of the image elements.
